(19) **Europäisches Patentamt**
**European Patent Office**
**Office européen des brevets**

(11) **EP 2 026 357 B1**

(12) **EUROPEAN PATENT SPECIFICATION**

(45) Date of publication and mention
of the grant of the patent:
**04.01.2012 Bulletin 2012/01**

(21) Application number: **07765861.5**

(22) Date of filing: **11.05.2007**

(51) Int Cl.:
**G21B 1/00** *(2006.01)* **G21B 3/00** *(2006.01)*

(86) International application number:
**PCT/ES2007/000278**

(87) International publication number:
**WO 2007/132045 (22.11.2007 Gazette 2007/47)**

(54) **CONTROLLED NUCLEAR FUSION PROCESS**

GESTEUERTES KERNFUSIONSVERFAHREN

PROCÉDÉ DE FUSION NUCLÉAIRE CONTRÔLÉE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.05.2006 ES 200601212**

(43) Date of publication of application:
**18.02.2009 Bulletin 2009/08**

(73) Proprietor: **Alset Technology LLC
Dover, DE 19904 (US)**

(72) Inventors:
• **GALINDO CABELLO, José Ignacio
Capital Federal, Buenos Aires (AR)**

• **ALVAREZ LOPEZ, José
Capital Federal, Buenos Aires (AR)**

(74) Representative: **Temino Ceniceros, Ignacio
Abril Abogados
Amador de los Rios 1-1°
28010 Madrid (ES)**

(56) References cited:
**WO-A2-03/066516 DE-A1- 4 229 688
DE-A1- 4 300 016 DE-A1- 19 845 223
US-A1- 2004 028 166**

Printed by Jouve, 75001 PARIS (FR)

## Description

The invention relates to the field of energy, more specifically to processes for the generation of energy from controlled nuclear fusion reactions.

STATE OF THE ART

In physics, nuclear fusion is the process to fuse two atomic nucleuses to form another one with a higher atomic weight, with the consequent release of energy. The new nucleus has a lower mass than the sum of the masses of the nucleuses which have been fused to form it. This difference in mass is released as energy. The released energy varies according to the nature of the nucleuses which are fused and also according to the reaction product. The amount of released energy agree with $E = mc^2$ formula wherein m is the difference in mass of the system before and after the fusion.

The atomic nucleuses tend to repel each other because of their positive charge. So, fusion only can occur in very high temperature and pressure conditions which allow compensating the repelling force. The high temperature increases the thermal agitation of the nucleus and that can lead up them to fuse by means of the tunnel effect. Temperatures on the order of millions of degrees are needed to achieve that effect. The same effect can be achieved with a very high pressure over the nucleuses, forcing them to be very close.

Contrary to nuclear fission, the use of nuclear fusion as a profitable source of energy has not been achieved, since the applied energy to the process is higher than that obtained by the fusion, even though there are numerous research programs in that direction.

There are known three isotopes of hydrogen: hydrogen, deuterium and tritium. The nucleus of each ordinary hydrogen atom consists in a single proton. Deuterium (D) has a natural abundance in natural water comprised between 0.0184 and 0.0082%, approximately one to 6500 hydrogen atoms, and its nucleus contains a proton and a neutron, having an atomic mass of two. When the isotope loses its electron, the resulting ion is called deuteron. Tritium (T), an unstable radioactive isotope, contains a proton and two neutrons in the nucleus, having an atomic mass of three.

At ordinary temperatures, hydrogen is low reactive. It does not reacts with oxygen at low temperatures, but it does it violently if temperature is increased above 700 °C, or if a catalyst is added, such as finely grounded palladium or platinum, obtaining water as the product of the reaction.

A very high temperature has to be provided, absorbing a huge amount of energy, in order to achieve the dissociation of molecular hydrogen to atomic hydrogen, but the reaction is reversible and the hydrogen atoms combine themselves again to give molecules releasing the energy absorbed before.

In 1989, Pons and Fleishman published the results of their experiments related to fusion of deuterium atoms under mild conditions of temperature and pressure, using a catalyst of palladium at the electrolysis of heavy water. A lot of researchers have tried to reproduce said experiments, even trying to optimize the process, but always using a metallic compound in solid state as catalyst of the fusion process.

The book "Project Sherwood - The US program in controlled fusion", Amasa S. Bishop 1958. Ed. Addison-Wesley Pub.; points up that a fusion process has to be self-sustaining in order to be useful. Thus, in a self-sustaining nuclear fusion reaction the released energy has to be enough to maintain the required temperature, so the generated energy has to be bigger than irradiated energy. Therefore, above certain critical temperature, the ignition temperature, the reaction will be self-sustaining. For the reaction of D-D fusion, said ignition temperature is about 400,000,000 °C.

The presence in the plasma of any heavy nucleus will greatly increase the irradiated energy ratio and, therefore it will increase the ignition temperature. It leads to the need of working with high-purity plasma.

As currently known, controlled nuclear fusion is based on the property of certain metals, particularly palladium and titanium, of being capable to absorb big volumes of hydrogen and isotopes thereof. Particularly, the reactions of nuclear fusion of deuterium atoms occur when they are confined in the crystalline cell of said metals, resulting in the formation of helium (He) plus a neutron and in the release of energy, according to the following reaction:

$$D_1^2 + D_1^2 \rightarrow He_2^3 + n_0^1 + 3.27 \text{ MeV}$$

Alternatively, the deuterium atoms can be fused to give a tritium atom plus hydrogen with the corresponding release of energy:

$$D_1^2 + D_1^2 \rightarrow T_1^3 + H_1^1 + 4.03 \text{ MeV}$$

The tritium formed can fuse in turn with deuterium, resulting also in the formation of helium plus a neutron and in the release of energy

$$D_1^2 + T_1^3 \rightarrow He_2^4 + n_0^1 + 17,50 \text{ MeV}$$

DE 19845223 discloses a process of nuclear fusion which is carried out in an engine or a turbine consisting in the injection of deuterium in the presence of xenon-helium as catalyst and its later ionisation. In this application, absolutely nothing about the possibility of using other types of catalysts is disclosed. Furthermore, a capital feature of the disclosed process is that it is not preceded of combustion, even of plasma generation.

DE 4 229 688 discloses a process of controlled nuclear fusion of deuterium atoms in the presence of Xenon as the only catalyst.

In the American patent application US 2004028166, a device to the introduction of a gaseous catalyst, in particular methane, in the reaction chamber of a process of nuclear fusion. In this case, the referred process is not a process of nuclear fusion at low temperature (controlled fusion) but, as said in page 1, paragraph [0004] of the specification, the process of nuclear fusion referred in said patent application is the nuclear fusion at high temperature, or hot nuclear fusion reactions.

ES 482832 discloses a process of combustion of gaseous hydrogen, which has been previously ionised by electromagnetic irradiation.

Thus, the need for a process of controlled nuclear fusion of deuterium atoms still exists, in order to achieve a stable and low cost generation of energy.

SUMMARY OF THE INVENTION

The inventors have surprisingly found that is possible to carry out a process of controlled nuclear fusion of deuterium atoms inside a combustion chamber, comprising the combustion of a gaseous fuel which comprises deuterium atoms in the presence of an oxidation gas and a gaseous catalyst, under at least 10.13 bar (10 atmospheres). Alternatively, the process of controlled nuclear fusion comprises the generation of a plasma from a gaseous fuel which comprises deuterium atoms in the presence of a gaseous catalyst, inside a reactor under at least 0.1 millibar of pressure.

According to the present invention, the term "controlled nuclear fusion" refers to the process of nuclear fusion which occurs at temperatures below those necessary for the process of thermonuclear fusion. Particularly, according to one embodiment of the present invention, the temperature of the process of controlled nuclear fusion is that one resulting of the combustion process of the gaseous fuel under said conditions of pressure.

In the context of the present invention, the term "fuel" refers to any material capable to release energy when varying the chemical structure thereof. Therefore, the term is not limited only to substances which release energy when burnt (reacting with oxygen), but, for example, hydrogen and isotopes thereof are also understood to be fuels when used to provide energy in a process of nuclear fusion.

According to the present invention, the term "catalyst" has to be understood as a substance (compound or element) capable of accelerating a chemical reaction remaining itself unaltered, i.e. it is not consumed through the reaction. Catalysts do not vary the final energetic balance of the chemical reaction but they only allow setting the equilibrium more or less promptness.

The catalyst used in the present invention, is a gaseous compound which is a source of carbon, chlorine, nitrogen, phosphorous, oxygen, argon or mixtures thereof.

Therefore, according an aspect of the present invention, a process for the production of energy by the controlled nuclear fusion of deuterium atoms is provided characterised in that it comprises the combustion of a gaseous fuel which comprises deuterium atoms in the presence of an oxidation gas and a gaseous catalyst which is a source of carbon, chlorine, nitrogen, sulphur, phosphorous, oxygen, argon or mixtures thereof, under at least 10 atmospheres of positive pressure.

As an embodiment of the first aspect of the invention, the gaseous fuel is selected from deuterium and a mixture of deuterium and $H_2$.

According to a further embodiment, the gaseous fuel is in an ionised atomic state, including plasma state. Thus, the gaseous fuel can be ionised before the introduction in the combustion chamber or during the process of combustion. Preferably, the ionisation is carried out during the process of combustion.

The reagents (gaseous fuel, oxidation gas) and the gaseous catalyst can be supplied to the combustion chamber independently, i.e. by independent injectors or by any other suitable mean for the introduction of a gaseous flow into the combustion chamber, or they can be introduced in the combustion chamber after carrying out the mixture outside said chamber.

According to an embodiment of the invention, the gaseous fuel is the $H_2$ produced through a breaking down process of the water molecule. The produced hydrogen contains an amount of deuterium which, as said before, is about 1 deuterium atom for 6500 hydrogen atoms. There are known some breaking down processes of the water molecule, such as electrolysis and thermolysis.

According to an embodiment of the present invention, the gaseous fuel and the oxidation gas are produced by the process of electrolysis of water in the presence of sodium chloride as electrolyte, using a carbon anode. Preferably, the water contained in an electrolytic cell has a higher content in deuterium than is usual. More preferably, heavy water ($D_2O$) is used.

As is already known, in the electrolysis of water, the electric current through the water produces a dissociation of the constituents of the molecule of water, hydrogen and oxygen. Hydrogen is collected in the cathode and oxygen in the anode. The following electrochemical reactions occur in the process of electrolysis of water with sodium chloride as electrolyte:

Cathode: $2\,H_2O(l) + 2\,e^- \rightarrow H_2(g) + 2\,OH^-(aq)$

Anode: $2\,Cl^- \rightarrow Cl_2 + 2\,e^-$ $E^\circ_{ox}$ = -1.36 V $2\,H_2O \rightarrow O_2$ $+4\,H^+ +4\,e^-$ $E^\circ_{ox}$ = -1.23 V

The production of oxygen is more favoured thermodynamically, therefore the use of anodes wherein the formation of chlorine is kinetically favoured (more density of current of interchange and less over-voltage) is preferred according to the present invention. Thus, preferably the anode is a graphite anode. Chlorine formed at the anode is dragged by the flow of generated oxygen and it is introduced in the combustion chamber, acting as a catalyst of the process of nuclear fusion.

It has been demonstrated that the carbon anodes favours the formation of carbonium ions, which also can be dragged by the flow of oxygen to the combustion chamber, being used as catalyst of the controlled reaction of nuclear fusion of the invention.

Alternatively, as a source of gaseous catalyst, any other type of chemical and/or electrochemical reaction resulting in the generation of a gaseous compound which can be used as a source of carbon, chlorine, nitrogen, sulphur, phosphorous, oxygen, argon or a mixture thereof.

Thus, is possible to use commercially available gases as gaseous fuel, as oxidation gas and also as the catalyst.

Optionally, one or more reservoirs can be at disposal for the storage of the various gases of the process. The gases can be stored mixed or separated. Thus using the contained gases for the feeding of the combustion chamber where the process of controlled nuclear fusion reaction will be carried out according to the present invention.

The gaseous catalyst is a compound used as a source of: carbon, chlorine, nitrogen, sulphur, phosphorous, oxygen, argon or mixtures thereof.

In the present invention the term "source of carbon, chlorine, nitrogen, sulphur, phosphorous, oxygen", relates to those gaseous compounds which have at least one atom of carbon, chlorine, nitrogen, sulphur, phosphorous, oxygen or mixtures thereof in their molecules. Those gaseous compounds formed by the isotopes of these elements are also included. According to a preferred embodiment, the catalyst is a source of a carbon isotope with atomic mass from 9 to 14, preferably $^9C$, $^{10}C$, $^{11}C$, $^{12}C$ y $^{13}C$.

As another embodiment, the gaseous catalyst is selected from the group consisting of chlorine ($Cl_2$), carbonyl chloride ($COCl_2$), carbon tetrachloride ($CCl_4$), chlorine oxides ($Cl_2O$, $ClO_2$, $Cl_2O_6$, $Cl_2O_7$), carbon oxides (CO, $CO_2$), nitrogen ($N_2$), nitrous acid ($HNO_2$), nitrogen oxides (NO, $NO_2$, $N_2O$), nitric acid ($HNO_3$), sulphur oxides ($SO_3$, $SO_2$), argon and mixtures thereof.

As a further embodiment, the catalyst is selected from the group consisting of $Cl_2$, $COCl_2$, $CCl_4$, $HNO_2$, $HNO_3$, NO, $Cl_2O$, $ClO_2$, $Cl_2O_6$, $Cl_2O_7$, and mixtures thereof.

Amounts of catalyst below the 1 % with regard to the total of the mixture of combustion are generally enough. Preferably, the catalyst is present approximately in a proportion between 0.05% and 1 % with regard of the total of the combustion mixture. Preferably, the proportion of the catalyst with regard to the total of the combustion mixture is approximately between 0.1% and 0.5%.

The process disclosed in the present invention is carried out in a controlled nuclear fusion reactor which comprises a combustion chamber. Generally, the combustion chamber is a cylinder, usually fixed, with one closed extreme and a piston which fits very tight to the interior. The outer and inner positions of the piston modify the volume between the interior face of the piston and the walls of the chamber, thus applying at least 10.13 bar (10 atmospheres) of pressure over the contained gases according to the process of the invention. Preferably, said applied pressure is from 10.13 to 151.99 bar (10 to 150 atmospheres). Preferably from 20.26 to 141.85 bar, more preferably from 40.53 to 136.79 bar.

In the case that the process comprises the generation of a plasma from the gaseous fuel, the pressure inside the reactor is at least 0.1 millibar, preferably from 0.1 to 100 millibar, more preferably from 0.5 to 80 millibar; further more preferably from 1 and 70 millibar.

Once said pressure is applied inside the combustion chamber, the combustion of the gases is provoked. Different methods are already known to provoke said combustion, for example using an electric discharge. Thus, a suitable combustion chamber to carry out the process disclosed herein can be a piston of an internal-combustion engine.

As a second aspect of the present invention, a controlled nuclear fusion reactor is provided characterised in that it comprises a) a combustion chamber wherein the gaseous combustible, the oxidation gas and the gaseous catalyst are introduced; b) means for the introduction of the different gases; c) means for applying at least 10 atmospheres of positive pressure; and d) means for inducing the combustion.

Alternatively, in the case that the process of controlled nuclear fusion comprises the generation of a plasma in the presence of the catalyst according to the present invention, the reactor of the invention is characterized by comprising a) a combustion chamber where the gaseous fuel and the gaseous catalyst are introduced; b) means for the introduction of the different gases; c) means for apply a pressure of at least 0.1 millibar; and d) means to induce the generation of the plasma.

There are a number of known methods for the generation of a plasma, thus, for example, the application of pulsating electric discharges would allow to generate a plasma from a gas which comprises deuterium atoms.

Preferably, the various components of the engine are prepared with suitable materials to tolerate high temperatures.

Generally, the means for the introduction of the gases are injection systems already known in the state of the art.

The introduction of the gases in the combustion chamber of the reactor can be carried out by a single gaseous flow which comprises the mixture of all the gases, previously mixed outside the combustion chamber, or they can be introduced independently. Alternatively, the introduction of the flow of gaseous flow is independent of the flow of the oxidation gas which also contains the gaseous catalyst.

The already known internal-combustion engines, with the suitable modifications to include the controlled nuclear fusion reactor of the present invention, are also an aspect of the invention. Therefore, a third aspect of the present invention relates to an internal-combustion engine characterised in that it comprises the controlled nuclear fusion reactor according to the present invention, either the reactor performing the combustion of the gaseous fuel in the presence of the oxidation gas or the reactor wherein a plasma is generated.

In the context of the present invention, "internal-combustion engine" means a type of machinery which obtains mechanic energy directly from the chemical energy produced by a fuel burning inside a combustion chamber, the main part of an engine. Four types of internal-combustion engines are known:

i) The Otto cyclic engine, wherein the fuel mixture is ignited by the provoked action of a spark at the end of the compression stroke, this is the conventional petrol engine used in automotive and aeronautic products.

ii) The diesel engine, wherein the compression of the air by the pistons until achieving the suitable pressure and temperature leads to the ignition the fuel which is injected at the end of the compression stroke of the systems and usually consumes fuel oil. It is used in plants for the generation of electricity, in naval propulsion systems, in trucks, coaches and some cars.

iii) The rotatory engine. Nowadays known as Wankel Engine. It uses a triangular rotor inside an oval chamber instead piston and cylinder. The mixture of fuel and air is aspired through an aspiration opening and is seized between one face of the rotor and the wall of the chamber. The rotation of the rotor compresses the mixture, which is ignited by a spark-plug. The gases are exhausted through an exhaust opening by the rotor movement. The cycle occurs once in each one of the rotor faces, producing three power phases in each revolution.

iv) The combustion turbine. This is composed of a compressor, one or more combustion chambers and the gas turbine itself. The thermodynamic cycle of the gas in those turbines corresponds to Brayton's Cycle, and it consists in an adiabatic compression followed by a polytropic compression, and it ends with an adiabatic expansion. The most common use of this machinery is the propulsion of jet airplanes, and the turbines used in the generation of electric power are derivates thereof.

According to the invention, the combustion engine can have one or more controlled nuclear fusion reactors described above.

Once the gases have been introduced in the combustion chamber and a suitable pressure has been applied, the process of combustion is provoked, for example by a spark from a spark-plug which ignites the mixture usually when the piston of the combustion chamber reaches the combustion phase of the combustion cycle.

A fourth aspect of the present invention provides a vehicle which comprises the internal-combustion engine according to the present invention.

Throughout the description and claims the word "comprise" and variations of the word is not intended to exclude other technical features, additives, components, or steps. Additional objects, advantages and features of the invention will become apparent to those skilled in the art upon examination of the description or may be learned by practice of the invention. The following examples and drawings are provided by way of illustration, and are not intended to be limiting of the present invention.

EXAMPLES

Example 1. Assay of combustion in the presence of a catalyst.

Bomb calorimeters were used to carry out the experiments, these calorimeters were similar to those used for the determination of the combustion heat of chemical compounds and products, but suitable to tolerate from 30 to 40 atmospheres of pressure and temperatures of 450 °C.

A flow of ionised hydrogen and another flow of oxygen were introduced in the bomb calorimeters maintaining a temperature between 450 °C and 600 °C. Under these conditions, the explosive mixture was ignited by an electric spark and the increase of temperature was measured.

In a succession of consecutive explosions, the temperature of the bomb calorimeters was increased between 10 °C and 20 °C. All the previous facts agree with the "Law of the conservation of the energy".

The addition of little amounts of carbon tetrachloride to the explosive mixture resulted in an increase of between 40 °C. and 60 °C of the temperature of the bombs.

The increase of temperature found is attributed to the process of nuclear fusion occurred between the deuterium atoms, since the amount of catalyst added is so little that the extra energy of the combustion could not explain the increase of temperature.

Comparative example: Process of nuclear fusion of deuterium in absence of catalyst.

To perform this experiment, the electrolysis of water was carried out using various combinations of electrodes.

Distilled water was placed in an electrolysis cell with stainless steel electrodes for its molecular separation in hydrogen and oxygen, and a little amount of sulphuric acid was added to generate the electrolyte. The energy for the cell was directly supplied from a continuous current source. 5 kg of positive pressure were applied over the mixture of hydrogen and oxygen generated in the electrolytic cell before sending it directly to the internal-combustion engine which comprises the controlled nuclear fusion reactor of the invention. The engine was placed in a tester especially designed to measure the achieved performance. Once the gases were introduced in the combustion chamber of the reactor, a positive pressure between 15 and 20 kg was applied and the combustion was provoked by a spark generated by a spark-plug.

Energy obtained from each cubic metre of hydrogen used in the combustion was in the equivalent range between 2.7 and 3 kWh.

Example 2: Process of nuclear fusion of deuterium in the presence of catalyst.

The experiment of the comparative example was repeated with the same type of water from the same container, but this time one of the electrodes of the electrolytic cell was changed. The cathode stood with a stainless steel electrode and a carbon electrode was used as the anode.

Sodium chloride was added to the electrolyte in an amount about 0.2 and 0.5 g/l and then, the electrolysis of the solution was carried out. Thus, the result is the liberation of chemical compounds of carbon and chlorine at the anode, which act as catalysts in the process of controlled nuclear fusion. Again, a positive pressure of 5 kg was applied to the mixture of gases (hydrogen + oxygen + catalysts) produced through the electrolysis, before sending it directly to the internal-combustion engine, placed in the same tester.

The amount of mixture was exactly the same used in the previous experiment, but this time, the energy obtained from each cubic metre of hydrogen used in the combustion was in the equivalent interval from 8.1 to 9 kWh.

Considering that hydrogen have an energetic content between 119.6 MJ/Kg (33.2 kwh/Kg) and 141.6 MJ/Kg (39.3 kwh/Kg) and each cubic metre of hydrogen weights 89.9 g, is concluded that the 3 kwh obtained through the process of combustion of the comparative example, equals to a usual process of combustion of hydrogen, wherein the release of energy is within the acceptable intervals in this type of process.

The same amount of gas was used in the combustion of example 2 and the combustion of the comparative example, but the released energy was much bigger, which leads to the conclusion that the process of example 2 releases an additional energy contained in the hydrogen flow. This additional energy would come from the fusion of nucleuses of deuterium contained in the mixture of gases used in the combustion, by means of the presence of catalysts contained in the combustion chamber.

**Claims**

1. Process for the production of energy by controlled nuclear fusion of deuterium atoms, comprising the combustion in presence of an oxidation gas and under at least 10.13 bar of pressure or the generation of a plasma under at least 0.1 millibar of pressure of a gaseous combustible which comprises deuterium atoms, at temperatures below those necessary for a process of thermonuclear fusion, the process being carried out in presence of a gaseous catalyst which is a source of: carbon, chlorine, nitrogen, sulphur, phosphorous, oxygen, argon, an isotope thereof or a mixture thereof.

2. The process according to claim 1, wherein the nuclear fusion process comprises the combustion, under at least 10.13 bars of positive pressure, of:

   a) a gaseous combustible which comprises deuterium atoms; and
   b) an oxidation gas;

   in the presence of a gaseous catalyst which is a source of: carbon, chlorine, nitrogen, sulphur, phosphorous, oxygen or a mixture thereof.

3. The process according to claim 1, wherein the nuclear fusion process comprises the generation of a plasma of a gaseous combustible which comprises deuterium atoms, in the presence of a gaseous catalyst which is a source of carbon, chlorine, nitrogen, sulphur, phosphorous, oxygen, argon or a mixture thereof, on the inside of a reactor under at least 0.1 milibars of pressure.

4. The process according to any of claims 1-3, **characterised in that** said gaseous combustible is selected from deuterium and a mixture of $H_2$ and deuterium.

5. The process according to any of claims 1 or 4, **characterised in that** the gaseous catalyst is selected from the group consisting of $Cl_2$, $COCl_2$, $Cl_2O$, $ClO_2$, $Cl_2O_6$, $Cl_2O_7$, $CO$, $CO_2$, $CCl_4$, $N_2$, $NO$, $NO_2$, $N_2O$, $HNO_2$, $HNO_3$, $SO_3$, $SO_2$, argon and mixtures thereof.

6. The process according to claim 5, **characterised in that** the catalyst is selected from the group consisting of $COCl_2$, $CCl_4$, $HNO_2$, $HNO_3$, $NO$, $Cl_2O$, $ClO_2$, $Cl_2O_6$, $Cl_2O_7$, and mixtures thereof.

7. The process according to any of claims 1-6, **characterised in that** the source of carbon is an isotope of atomic weight between 9 and 14.

8. The process according to any of claims 1-7, **characterised in that** the gaseous combustible is in an ionized atomic state.

9. The process according to claim 8, **characterised in that** the gaseous combustible is ionized before introducing it into the combustion chamber or during the combustion process.

10. The process according to any of claims 1-9, further comprising an additional previous step of breaking down a molecule of water to yield hydrogen which is used as gaseous combustible.

11. The process according to any of claims 1 to 14, **characterised in that** the gaseous catalyst is between 0.05% and 1% with regard to the total combustion mixture.

12. The process according to any of claims 1 to 11, **characterised in that** a positive pressure between 10.13 and 151.99 bars is applied in the combustion chamber before starting said combustion.

**Patentansprüche**

1. Verfahren für die Erzeugung von Energie durch eine gesteuerte Kernfusion von Deuteriumatomen, das die Verbrennung in Anwesenheit eines Oxidationsgases und bei einem Druck von mindestens 10.15 bar oder die Erzeugung eines Plasmas bei einem Druck von mindestens 0.1 mbar aus einem gasförmigen, Deuteriumatome enthaltenden Brennstoff umfasst, bei Temperaturen, die unter den Temperaturen liegen, die für einen thermonuklearen Fusionsprozess erforderlich sind, wobei das Verfahren in Anwesenheit eines gasförmigen Katalysators stattfinden, der eine Quelle ist für Kohlenstoff, Chlor, Stickstoff, Schwefel, Phosphor, Sauerstoff, Argon, ein Isotop dieser Stoffe oder eine Mischung dieser Stoffe.

2. Verfahren nach Anspruch 1, bei dem der nukleare Fusionsprozess die Verbrennung bei mindestens 10,13 bar positiven Drucks von:

   a) einem gasförmigen, Deuteriumatome enthaltenden Brennstoff; und
   b) einem Oxidationsgas;

   umfasst, in Anwesenheit eines gasförmigen Katalysators, der eine Quelle ist für Kohlenstoff, Chlor, Stickstoff, Schwefel, Phosphor, Sauerstoff oder eine Mischung dieser Stoffe.

3. Verfahren nach Anspruch 1, bei dem der nukleare Fusionsprozess die Erzeugung eines Plasmas aus einem gasförmigen, Deuteriumatome enthaltenden Brennstoff umfasst, in Anwesenheit eines gasförmigen Katalysators, der eine Quelle ist für Kohlenstoff, Chlor, Stickstoff, Schwefel, Phosphor, Sauerstoff, Argon oder eine Mischung dieser Stoffe, im Inneren eines Reaktors bei einem Druck von mindestens 0,1 mbar.

4. Verfahren nach einem der Ansprüche 1-3, **dadurch gekennzeichnet, dass** der genannte gasförmige Brennstoff gewählt wird zwischen Deuterium und einer Mischung von $H_2$ und Deuterium.

5. Verfahren nach einem der Ansprüche 1-4, **dadurch gekennzeichnet, dass** der gasförmige Katalysator gewählt wird aus der Gruppe bestehend aus $Cl_2$, $COCl_2$, $Cl_2O$, $ClO_2$, $Cl_2O_6$, $Cl_2O_7$, $CO$, $CO_2$, $CCl_4$, $N_2$, $NO$, $NO_2$, $N_2O$. $HNO_2$, $HNO_3$, $SO$, $SO_2$, Argon und Mischungen dieser Stoffe.

6. Verfahren nach Anspruch 5, **dadurch gekennzeichnet, dass** der Katalysator gewählt wird aus der Gruppe bestehend aus $COCl_2$, $CCl_4$, $HNO_2$, $HNO_3$, $NO$, $Cl_2O$, $ClO_2$, $Cl_2O_6$, $Cl_2O_7$, und Mischungen dieser Stoffe.

7. Verfahren nach einem der Ansprüche 1-6, **dadurch gekennzeichnet, dass** die Kohlenstoffquelle ein isotop mit einer Atommasse zwischen 9 und 14 ist.

8. Verfahren nach einem der Ansprüche 1-7, **dadurch gekennzeichnet, dass** der gasförmige Brennstoff sich in einem ionisierten Atomzustand befindet.

9. Verfahren nach Anspruch 8, **dadurch gekennzeichnet, dass** der gasförmige Brennstoff vor dem Einbringen in die Brennkammer oder im Verlauf des Brennvorgangs ionisiert wird.

10. Verfahren nach einem der Ansprüche 1-9, das einen zusätzlichen vorgeschalteten Schritt umfasst, in dem ein Wasserstoffmolekül abgebaut wird, um Wasserstoff zu erhalten, der als gasförmiger Brennstoff verwendet wird.

11. Verfahren nach einem der Ansprüche 1-10, **dadurch gekennzeichnet, dass** der gasförmige Katalysator 0,05% bis 1 % des gesamten Brenngemischs ausmacht.

12. Verfahren nach einem der Ansprüche 1-11, **dadurch gekennzeichnet, dass** vor Beginn der genannten Verbrennung die Verbrennungskammer unter einen positiven Druck von 10,13 bis 151,9 bar gesetzt wird.

**Revendications**

1. Processus concernant la production d'énergie par fusion nucléaire contrôlée d'atomes de deutérium qui comprend la combustion en présence d'un gaz d'oxydation et à un minimum de 10,13 bars de pression ou bien la génération d'un plasma à un minimum de 0,1 millibars de pression d'un combustible gazeux qui comprend des atomes de deutérium, à des températures en dessous de celles nécessaires pour un processus de fusion thermonucléaire ; ce processus sera fait en présence d'un catalyseur gazeux qui est une source de carbone, de chlore, d'azote, de souffre, de phosphore, d'oxygène, d'argon ou bien un isotope de ces derniers ou un mélange de ceux-ci.

2. Processus selon la revendication 1 dans lequel le processus de fusion nucléaire comprend la combustion à un minimum de 10,13 bars de pression positive:

   a) d'un combustible gazeux qui comprend des atomes de deutérium; et
   b) d'un gaz d'oxydation;

   en présence d'un catalyseur gazeux qui est une source de carbone, de chlore, d'azote, de souffre, de phosphore, d'oxygène, ou bien un mélange de ceux-ci.

3. Processus selon la revendication 1 dans lequel le processus de fusion nucléaire comprend la génération de plasma d'un combustible gazeux qui comprend à son tour des atomes de deutérium, en présence d'un catalyseur gazeux qui est une source de carbone, de chlore, d'azote, de souffre, de phosphore, d'oxygène, d'argon ou bien un mélange de ceux-ci à l'intérieur d'un réacteur à un minimum de 0,1 millibars de pression.

4. Processus selon l'une quelconque des revendications 1 à 3 **caractérisé en ce que** ce combustible gazeux est sélectionné entre du deutérium et un mélange de $H_2$ et de deutérium.

5. Processus selon les revendications 1 ou 4 **caractérisé en ce que** le catalyseur gazeux est sélectionné parmi un groupe composé de $Cl_2$. $COCl_2$, $Cl_2O$, $ClO_2$, $Cl_2O_6$, $Cl_2O_7$, CO, $CO_2$, $CCl_4$, $N_2$, NO, $NO_2$, $N_2O$, $HNO_2$, $HNO_3$, SO, $SO_2$, d'argon et de mélanges de ces derniers.

6. Processus selon la revendication 5 **caractérisé en ce que** le catalyseur est sélectionné parmi une groupe composé de $COCl_2$. $CCl_4$, $HNO_2$, $HNO_3$, NO, $Cl_2O$, $ClO_2$, $Cl_2O_6$, $Cl_2O_7$, et de mélanges de ceux-ci.

7. Processus selon l'une quelconque des revendications 1 à 6 **caractérisé en ce que** la source de carbone est un isotope ayant un poids atomique d'entre 9 et 4.

8. Processus selon l'une quelconque des revendications 1 à 7 **caractérisé en ce que** le combustible gazeux est dans un état atomique ionisé

9. Processus selon la revendication 8 **caractérisé en ce que** le combustible gazeux est ionisé avant de l'introduire dans la chambre de combustion ou pendant le processus de combustion.

10. Processus selon l'une quelconque des revendications 1 à 9 qui comprend également une étape préalable supplémentaire de dégradation d'une molécule d'eau pour produire de l'azote qui est utilisé comme combustible gazeux.

11. Processus selon l'une quelconque des revendications 1 à 10, **caractérisé en ce que** le catalyseur gazeux se situe entre 0,05% et 1% par rapport au mélange de combustion totale.

12. Processus selon l'une quelconque des revendications 1 à 11 **caractérisé en ce que** l'on applique une pression positive d'entre 10,13 et 151,9 bars dans la chambre de combustion avant de commencer cette combustion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19845223
- DE 4229688
- US 2004028166 A
- ES 482832

### Non-patent literature cited in the description

- **Amasa S. Bishop.** Project Sherwood - The US program in controlled fusion. 1958